# FASCICULE DE BREVET EUROPEEN

(11) **EP 3 313 188 B1**
(45) Date de publication et mention de la délivrance du brevet: **30.12.2020**
(21) Numéro de dépôt: 16739229.9
(22) Date de dépôt: 21.06.2016
(51) Int. Cl.: A21D 2/18, A21D 2/22, A21D 2/38, A21D 8/06, A21D 8/04, A21D 10/00

(54) **UTILISATION D'UN AMELIORANT DE PANIFICATION ET PROCÉDÉ DE PANIFICATION POUR PAINS PRÉCUITS ET CONSERVÉS SANS CONGÉLATION METTANT EN OEUVRE L'AMELIORANT DE PANIFICATION**
VERWENDUNG EINES BROTVERBESSERERS UND BROTZUBEREITUNGSVERFAHREN FÜR VORGEBACKENE BROTLAIBE MIT LAGERUNG OHNE EINFRIEREN, DAS DEN BROTVERBESSERER VERWENDET
USE OF A BREAD IMPROVER AND BREADMAKING METHOD FOR PRECOOKED LOAVES STORED WITHOUT FREEZING INVOLVING THE BREAD IMPROVER

(30) Priorité: 29.06.2015 FR 1556077
(43) Date de publication de la demande: 02.05.2018
(73) Titulaire: Lesaffre et Compagnie, 75001 Paris (FR)
(72) Inventeur: BLAREAU, François, 59700 Marcq en Baroeul (FR); BONNARDEL, Pascal, 59700 Marcq en Baroeul (FR); DE BLESER, Davy, 1745 Opwijk (BE); WENTWORTH, Richard, 59126 Linselles (FR)
(74) Mandataire: Plasseraud IP
(86) Numéro de dépôt international: PCT/FR2016/051505
(87) Numéro de publication internationale: WO 2017/001744

(56) Documents cités:
- WO-A1-2006/002985
- WO-A1-2011/039324
- WO-A1-2013/028071
- CN-A- 102 113 530
- FR-A1- 2 865 902
- FR-A1- 2 900 799
- Margo - Csm ET AL: "Lindenstrasse 16 CH-6340 Baar Lindenstrasse 16 CH-6340 Baar", , 17 décembre 2013 (2013-12-17), XP055266531, Extrait de l'Internet: URL:http://www.margo.ch/fr/assortiment-de- boulangerie/produits/pre-melanges-pour-pai ns [extrait le 2016-04-19]

## Description

La présente invention concerne l'utilisation d' un améliorant de panification permettant la conservation prolongée d'un pain précuit. Elle concerne aussi un procédé amélioré pour la préparation de produits cuits de panification à partir de pains précuits et conservés à température ambiante ou à 4°C mettant en oeuvre l'améliorant de panification.

La panification concerne, dans le présent contexte, l'ensemble des étapes permettant de fabriquer un produit cuit de boulangerie, comme des pains, par la cuisson au four après fermentation d'une pâte ou pâton contenant par définition au moins les ingrédients suivants : de la farine de céréales, de l'eau, du sel et de la levure active de boulangerie. Le terme « farine de céréales » se réfère à une farine issue d'une céréale ou encore d'une combinaison de plusieurs céréales.

La préparation d'une pâte de boulangerie prête à être cuite au four est un processus comprenant plusieurs étapes, y compris au moins une étape de pétrissage et au moins une étape de fermentation.

Généralement, le boulanger travaille en direct, c'est-à-dire dans un procédé non différé, ce qui peut avoir une incidence sur l'état de fraîcheur du pain. Cuit le matin, le pain reste frais jusqu'en début d'après-midi, puis sa qualité se dégrade avec un dessèchement ou un ramollissement de la croûte et une perte de croustillant de saveur et une perte de moelleux de la mie. Aujourd'hui, le consommateur moderne vient chercher son pain qu'il souhaite frais, à toute heure de la journée y compris le soir à la sortie de son travail.

Pour pouvoir répondre à cette demande du consommateur, le boulanger devrait effectuer plusieurs cuissons par jour espacées dans le temps, c'est-à-dire travailler en différé. Or, la préparation d'une pâte prête à être cuite est un travail long et intensif en main-d'œuvre et sa conservation est limitée dans le temps avant sa mise au four. A température ambiante la plage de temps pour la conservation est de moins de 2 heures. Ce temps est de moins de 75 heures si la conservation est opérée à 4°C, c'est-à-dire à ce qui est communément désigné par froid positif. En tout cas jamais la conservation ne va au-delà de 3 jours.

Plusieurs procédés ont été développés pour pallier ce problème.
1- Surgélation de pain cuit : Il a été essayé par exemple de surgeler le pain ou produit analogue totalement cuit, puis le décongeler juste avant la vente par un bref passage au four. Cette méthode présente deux défauts importants : d'une part, la mie se déshydrate et laisse apparaître des auréoles ou couronnes blanches et, d'autre part, la croûte s'écaille. Cette méthode du pain totalement cuit surgelé ne permet donc pas d'obtenir des produits de boulangerie de bonne qualité.
2- Pâte précuite conservée à 4°C ou congelée : On connaît ainsi la technologie de la « pâte précuite ». Cette technologie se caractérise par une étape de pré-cuisson de la pâte fermentée qui coagule la pâte à cœur et forme un film souple à la périphérie, précurseur de la croûte. Une caractéristique de la pâte précuite est l'absence de brunissement dudit film souple : un léger brunissement indique l'ébauche de la croûte et donc que le stade de la pré-cuisson est déjà dépassé. Ceci se traduira par des défauts ultérieurs : pertes de rendement de la production et écaillage de la croûte après la cuisson finale. L'étape de pré-cuisson est donc particulièrement délicate. La technologie de la « pâte précuite » exclut dans la plupart des cas les pièces de grosses dimensions, en raison de la difficulté de coaguler à cœur sans pour autant esquisser la croûte. Il s'agit donc le plus souvent de petits pains, demi-baguettes, ou baguettes courtes. La pâte précuite peut être soit conservée pendant quelques heures dans des conditions évitant le dessèchement (précuit frais), soit surgelée. Il est également important de veiller à limiter le dessèchement des pâtes précuites avant, pendant et après la surgélation. Lors de la cuisson finale, typiquement au niveau du point de vente, les pâtes précuites surgelées passent directement du congélateur au four. Du pain frais est donc disponible à tout moment de la journée après 10 à 20 minutes de cuisson finale, selon la forme et le poids des pâtons précuits. Un défaut gênant important de la technologie de la pâte précuite congelée actuelle est la rétraction des pâtes précuites lors de la cuisson finale, qui réduit leur volume d'au moins 10%.

Les documents US-A-4788067 et US-A-4861601 décrivent des procédés appartenant à cette technologie des pâtes précuites nécessitant une étape de cuisson finale de la pâte précuite de 10 à 15 minutes.

Le document WO 2006/002985 au nom de la demanderesse propose un procédé amélioré permettant de fournir pendant toute la journée et en peu de temps des produits cuits de bonne qualité sortant du four. Dans ce procédé, un pâton formé fermenté et prêt à cuire correspondant au dit produit cuit est soumis à une pré-cuisson dans un four jusqu'à ce que sa mie soit coagulée et qu'une croûte soit formée et colorée. Le pâton précuit ainsi obtenu est surgelé pour sa conservation.

Ainsi, les techniques et procédés de la pâte précuite, connus de l'art antérieur nécessitent soit de faire appel à la surgélation du pâton précuit pour sa conservation, soit de réduire au minimum la période de conservation car ces procédés mettent en œuvre des pâtes précuites qui ne se conservent pas longtemps ni bien.

Pour remédier aux problèmes ci-dessus, la demanderesse a mis au point un améliorant de panification permettant aux pains précuits d'être conservés à température ambiante jusqu'à 7 jours, ou à froid positif pendant une période allant jusqu'à 1 mois de conservation tout en gardant un excellent état de fraicheur. Les pains cuits obtenus par la cuisson finale des pains précuits mettant en œuvre l'améliorant de l'invention présentent des bonnes qualités de goût et de fraicheur.

Aussi la demanderesse a mis au point un procédé amélioré de panification de pain cuit obtenu par cuisson finale d'un pâton précuit conservé à température ambiante pendant une période pouvant aller jusqu'à 7 jours ou à froid positif pendant plusieurs jours jusqu'à 1 mois de conservation sans que la fraîcheur du pain cuit final ne soit altérée. Ce procédé qui sera détaillé par la suite comprend l'utilisation de l'améliorant de l'invention.

Les objets de l'invention sont définis dans les revendications.

La demanderesse a trouvé, après des nombreux essais, que l'utilisation dans l'améliorant, d'une exoamylase maltogène permet de conserver le pâton précuit à température ambiante ou à froid positif pendant quelques jours sans que sa fraîcheur ou celle du produit final ne soit altérée.

Le terme exoamylase maltogène désigne ici les enzymes, classées sous la référence EC 3.2.1.1, capables de dégrader le maltotriose en maltose et en glucose.

La composition enzymatique de l'améliorant de panification tel qu'utilisé selon l'invention peut comprendre en plus de l'exoamylase maltogène des enzymes telles que alpha ou béta amylase, amyloglucosidase, pullulanase, endo et exo amylases, cellulases, xylanases, protéases, lipases et phospholipases.

La composition enzymatique de l'améliorant de panification tel qu'utilisé selon l'invention comprend en plus de l'exoamylase maltogène, de l'amyloglucosidase, de l'alpha amylase, et de la xylanase.

L'améliorant tel qu'utilisé selon l'invention comprend :
- une composition enzymatique comprenant de l'exoamylase maltogène, de l'amyloglucosidase, de l'alpha amylase, et de la xylanase,
- de l'acide ascorbique,
- de la farine de blé prégélatinisée, et
- de la farine de blé malté.

Lorsque l'améliorant est utilisé dans un procédé de panification tel que celui qui sera décrit plus loin, les différents constituants sont utilisés aux teneurs suivantes qui sont exprimées en pourcentage du boulanger c'est-à-dire par rapport à 100% de la farine au pétrin :
- l'exo amylase maltogène à une teneur comprise entre 50 et 200 ppm,
- l'amyloglucosidase à une teneur comprise entre 50 et 500 ppm,
- l'alpha amylase à une teneur comprise entre 1 et 20 ppm,
- la xylanase à une teneur comprise entre 10 et 80 ppm,
- de l'acide ascorbique à une teneur comprise entre 50 et 300 ppm,
- de la farine de blé prégélatinisée à une teneur comprise entre 0,1 et 4%, et
- de la farine de blé malté à une teneur comprise entre 0,05 et 0,5%.

Le procédé amélioré selon l'invention est un procédé de fabrication d'un pain cuit par la cuisson finale dans un four d'un pâton ou pain précuit et conservé à température ambiante ou à froid positif, le pâton étant préparé avec des ingrédients comprenant en plus de la levure, du sel, de la farine et de l'eau un améliorant de panification selon la présente invention.

Ce procédé permet l'obtention de pâtons précuits qui se conservent à température ambiante jusqu'à 7 jours et à froid positif pendant une durée pouvant aller jusqu'à un mois tout en restant dans un état de fraîcheur optimum.

Dans le cadre de la présente invention, le terme « four » se réfère à des fours où le chauffage de la pâte est effectué par la chaleur. Ce terme « four » ne couvre donc pas les fours à micro-ondes. Le four est de préférence un four de boulangerie, notamment de type rotatif, ou à sole fixe, ou encore sous forme de tunnel, mais peut être également tout four ménager permettant d'atteindre les températures indiquées dans l'enceinte du four. Les fours de boulangerie permettent la cuisson de pièces de panification à des températures entre 150°C et 280°C, éventuellement avec injection de vapeur dans le four.

Le terme « produit cuit » se réfère à un produit totalement cuit, prêt à être consommé. Dans le cas du procédé traditionnel du précuit congelé et dans le cas de l'invention, le produit cuit est donc le produit après cuisson finale et se distingue par conséquent du pâton précuit qui n'a subi qu'une pré-cuisson.

Selon le procédé de l'invention, un pâton formé fermenté et prêt à cuire correspondant au produit cuit final est soumis à une pré-cuisson dans un four jusqu'à ce que sa mie soit coagulée et qu'une croûte soit formée et colorée. Le pâton précuit ainsi obtenu est refroidi pour sa conservation. Le produit totalement cuit est obtenu par une cuisson finale au four du pâton précuit pendant une durée inférieure ou égale à 10 minutes, et de préférence pendant une durée comprise entre 3 et 7 minutes, à une température du four comprise entre 200°C et 260°C. Avantageusement, la cuisson finale est effectuée à une température de 200°C à 220°C.

Par ailleurs la cuisson finale ne nécessite pas d'injection de vapeur.

Suivant une forme de réalisation, la pré-cuisson est effectuée dans un four chauffé initialement à une température comprise entre 220°C et 280°C et de préférence entre 210°C et 250°C. Préférentiellement, la température à cœur en fin de la pré-cuisson est supérieure ou égale à 95°C.

De manière générale, par fraicheur de pain, on entend un pain qui n'est pas gâté, flétri ni rassis. Autrement dit, un pain qui a conservé son goût d'après la cuisson, et dont la mie a conservé son moelleux, sa fermenté et son élasticité pour une bonne mâche et une bonne sensation en bouche.

Dans le présent contexte, les termes « coloré » et « coloration » concernent le brunissement de la croûte lors de la cuisson au four, ce brunissement distinguant notamment la croûte de la mie.

De manière utile, le refroidissement du pâton précuit est réalisé de manière à atteindre rapidement une température à cœur inférieure ou égale à 30°C ou encore 40°C si la conservation ultérieure du pâton précuit est réalisée à température ambiante.

Le pâton précuit peut ainsi être conservé à 4°C pendant plusieurs jours voire pendant un mois sans que son aspect ni sa fraîcheur ne soient altérés.

Le pâton est par définition préparé avec au moins de la farine de céréales, de l'eau (éventuellement ajoutée sous forme de lait ou d'autre produit contenant de l'eau), du sel et de la levure active de boulangerie.

Selon le procédé de l'invention le pâton est préparé à partir d'une composition comprenant de la farine, de l'eau, du sel, de la levure du boulanger et l'améliorant de panification de l'invention.

D'autres ingrédients peuvent aussi entrer dans la composition du pâton.

A titre indicatif on peut en citer :
- au moins un sucre intervenant dans la réaction dite de Maillard en une quantité excédant celle qui est fermentée par la levure avant la pré-cuisson et suffisante pour donner de la couleur à la croûte lors de la pré-cuisson et/ou une composition enzymatique capable d'apporter au moins un sucre intervenant dans la réaction dite de Maillard en une quantité excédant celle qui est fermentée par la levure avant la pré-cuisson et suffisante pour donner de la couleur à la croûte lors de la pré-cuisson, et/ou au moins une protéine intervenant dans le mécanisme de la réaction dite de Maillard, et
- au moins un stabilisant alimentaire.

Les réactions de type Maillard sont toutes les réactions où sous l'action de la chaleur les sucres ayant une fonction réductrice donneront avec les composés azotés des composés colorés. Les sucres les plus réactifs sont les sucres à 5 ou 6 atomes de carbone, mais les sucres à 12 atomes de carbone, comme le saccharose, le lactose et le maltose, participent aussi à ces réactions.

Ainsi, les ingrédients du pâton peuvent de manière utile comprendre au moins un ingrédient contenant un sucre ou une protéine intervenant dans les réactions de type Maillard, cet ingrédient étant choisi dans la famille du lactosérum, du lactose, du glucose (= dextrose), du galactose, du saccharose et du fructose.

Le sucre en excès intervenant dans les réactions de type Maillard, comme le glucose ou le xylose, est au moins partiellement, voire dans sa totalité, apporté lors de la fermentation du pâton par au moins une préparation enzymatique, et en particulier une telle préparation enzymatique contenant au moins une amyloglucosidase

D'autres ingrédients jouant un rôle d'améliorant peuvent également être ajoutés lors de la préparation du pâton.

Ainsi, les ingrédients du pâton peuvent comprendre un ou des stabilisants alimentaires, de préférence choisi(s) parmi les stabilisants alimentaires correspondants à des dérivés de cellulose, des amidons chimiquement ou physiquement modifiés, des gommes et des farines pré-gélatinisées, et en particulier un ou plusieurs stabilisants alimentaires choisi(s) parmi le carboxyméthylcellulose, la gomme de xanthane, de guar, de caroube.

Le pâton peut être préparé avec des ingrédients comprenant à la fois :
- l'améliorant de l'invention,
- un stabilisant alimentaire ; et
- un ingrédient contenant un sucre ou des protéines intervenant dans les réactions de type Maillard, de préférence du lactosérum et/ou du glucose.

De manière avantageuse, le pâton est préparé avec des ingrédients comprenant à la fois :
- l'améliorant de l'invention,
- un stabilisant alimentaire,
- une source d'enzymes apportant lors de la fermentation de la pâte des sucres intervenants dans les réactions de type Maillard, et
- un émulsifiant.

Les émulsifiants préférés sont les émulsifiants E472e et E472f (esters diacetyl-tartriques de mono- et di-glycérides d'acides gras).

Les termes farines de céréales maltées ou malt de céréales, ou encore extrait enzymatique de malt sont considérés comme des équivalents couverts par le terme « céréales maltées ». Cette règle s'applique aussi quand la céréale est précisée par son nom (blé, orge).

La présente invention est particulièrement utile pour des produits cuits choisis parmi tous types de pains, y compris les pains spéciaux, y compris les pains viennois, pains au lait, brioches. Le poids du produit cuit peut notamment être de 30 g à 2 kg. L'invention est particulièrement intéressante pour les pâtons de 200 g à 2 kg, elle ne concerne ni les pâtes à pizza ni les croissants.

Grâce à la présente invention, un produit cuit et frais de qualité peut maintenant être fourni en 5 minutes ou moins. Ceci est particulièrement intéressant pour les ventes dans des points chauds, mais l'invention permet également au boulanger de dépanner des clients ayant d'urgence besoin d'un produit de panification frais après épuisement de la production en direct de la journée réalisée par le boulanger. Finalement, l'invention a également un intérêt pour des consommateurs qui souhaitent obtenir des produits cuits de qualité en réalisant eux-mêmes la cuisson finale.

La présente invention permet également de pouvoir trancher le pain dans un délai plus court après la cuisson finale. Par exemple pour un pain de 850 g cuit, on peut trancher au bout de 30 min de refroidissement (resuage) au lieu de 60 min.

Les avantages de la présente invention sont illustrés plus clairement dans les exemples ci-après.

### EXEMPLES

### Exemple d'un pain cuit suivant l'invention (essai 4) et exemples comparatifs (1, 2 et 3)

Le schéma de fabrication de la pâte prête à être cuite utilisé pour les 4 exemples ci-dessous est le suivant :

### Composition de base de la pâte :

Farine 100%, eau 57%, levure pressée 1,9%, sel 1,65%. Toute recette différente peut également fonctionner (pain complet, multicéréales, au levain...)

Les formules des pâtes suivant l'invention et selon les exemples comparatifs sont exprimées, comme d'habitude dans le domaine technique, en pourcentage du boulanger, c'est-à-dire en parties en masse de l'ingrédient pour 100 parties en masse de farine de céréales mise en œuvre. Elles sont données dans le tableau 1 ci-dessous.

La levure fraîche de panification ou levure pressée de panification est une levure à environ 30% de matières sèches, vendue sous la marque "L'HIRONDELLE"® bleu par le GIE LESAFFRE à 94701 Maisons Alfort, France.

### Procédé :

Pétrissage : 3 minutes en 1^{ère} vitesse sur pétrin à spirale, et 8 minutes en 2^{ème} vitesse. A noter que tout type de pétrin convient.

Température de la pâte : 26°C

Division : en pièces de 950g, boulage, suivi de 20 min de repos à température ambiante, façonnage, dépose en moule ouvert, fermentation pendant 80 min à 30°C et à 80% d'Humidité Relative (HR).

Pré-cuisson : pendant 30 min dans un four chauffé initialement à 250°C puis à 210°C avec injection de vapeur. La température à cœur est comprise entre 95°C et 97 °C.

Refroidissement pendant 1h à 1h30 à température ambiante pour atteindre 30°C à cœur.

Emballage de chaque pain sous air dans un emballage hermétique à l'eau.

Conservation à 4°C pendant 7 jours.

Cuisson finale sans vapeur pendant 5 min à 210°C (tout type de four), température à cœur 10°C.

Refroidissement à température ambiante pendant 20 min jusqu'à ce que la température à cœur atteigne 30°C.

Tranchage en machine et emballage sous air. Stockage à température ambiante pendant 7 jours et mesure de la fraîcheur sur les mies pendant cette conservation.

### Résultats/observations :

Les pains cuits ont été soumis à l'appréciation d'un panel d'experts. Les résultats et observations notées sont les suivants :
- la croûte est bien colorée et ne présente pas d'écailles que ce soit après la pré-cuisson ou après la cuisson finale. Les produits finaux suivant l'invention sont légèrement plus colorés que ceux des exemples comparatifs.
- la rétraction du pâton lors de la cuisson finale est inférieure à 5% sur le volume du produit cuit. Pas de différence notable entre les produits suivant l'invention et ceux des exemples comparatifs.
- La mie des produits cuits ne présente pas d'auréoles ou couronnes blanches comme dans le cas d'un produit totalement cuit qui a été surgelé et ensuite décongelé.
- Le pain cuit selon le procédé de l'invention conserve sa fraicheur même après 7 jours de conservation à température ambiante : note 5/10 comparés à 2 et 3 pour les essais 1, 2 et 3.
- La combinaison des ingrédients de l'essai 2 et 3 montre en 4 un effet synergique supérieur en termes de fraicheur de pain.

Comme illustré dans les exemples, la présente invention permet de fournir au consommateur à tout moment de la journée et en quelques minutes seulement de cuisson finale, un produit de qualité fraîchement sorti du four et qui reste frais pendant plusieurs jours de conservation.

Le tableau suivant (tableau 1) résume la composition ainsi que la note fraicheur établie pour chacun des essais réalisés :

**Tableau 1**

| | g/100kg farine | | | |
|---|---|---|---|---|
| étiquetage | Essai 1 | Essai 2 | Essai 3 | Essai 4 |
| Farine de blé prégélatinisé | | 2612,610 | | 2612,610 |
| Farine de blé | 4986,560 | 2003,000 | 4979,06 | 1995,500 |
| Farine de blé malté | | 360,000 | | 360,000 |
| Amyloglucosidase | | 10,950 | | 10,950 |
| Acide ascorbique | 10,800 | 10,800 | 10,800 | 10,800 |
| Exo amylase antirassissante maltogène | | | 7,500 | 7,500 |
| Alpha amylase | 1,440 | 1,440 | 1,440 | 1,440 |
| Xylanase | 1,200 | 1,200 | 1,200 | 1,200 |
| | 5000,000 | 5000,000 | 5000,000 | 5000,000 |
| | | | | |
| Résultat fraicheur de mie (notes de texture de mie d'un panel d'experts en analyse sensorielle, moyenne de 1 à 10, 10 étant la meilleure note) à 7j à température ambiante | 2 | 2 | 3 | 5 |

## Revendications

1. Utilisation d'un améliorant de panification dans un procédé de fabrication de pain cuit par cuisson finale d'un pain précuit et conservé sans congélation à température ambiante pendant une durée allant jusqu'à 7 jours, ledit améliorant de panification comprenant :
a. une composition enzymatique comprenant une exoamylase maltogène, ladite exoamylase maltogène étant une enzyme classée sous la référence 3.2.1.1, capable de dégrader le maltotriose en maltose et en glucose, de l'amyloglucosidase, de l'alpha amylase et de la xylanase,
b. de l'acide ascorbique,
c. de la farine de blé prégélatinisée , et
d. de la farine de blé malté,
- l'exo amylase maltogène étant utilisée à une teneur comprise entre 50 et 200 ppm,
- l'amyloglucosidase étant utilisée à une teneur comprise entre 50 et 500 ppm,
- l'alpha amylase étant utilisée à une teneur comprise entre 1 et 20 ppm,
- la xylanase étant utilisée à une teneur comprise entre 10 et 80 ppm,
- l'acide ascorbique étant utilisé à une teneur comprise entre 50 et 300 ppm,
- la farine de blé prégélatinisée étant utilisée à une teneur comprise entre 0,1 et 4%, et
- la farine de blé malté étant utilisée à une teneur comprise entre 0,05 et 0,5%,
lesdites teneurs étant exprimées en pourcentage du boulanger c'est-à-dire par rapport à 100% de la farine au pétrin.

2. Utilisation d'un améliorant de panification dans un procédé de fabrication de pain cuit par cuisson finale d'un pain précuit et conservé sans congélation à 4°C pendant une durée allant jusqu'à 1 mois, ledit améliorant de panification comprenant :
a. une composition enzymatique comprenant une exoamylase maltogène, ladite exoamylase maltogène étant une enzyme classée sous la référence 3.2.1.1, capable de dégrader le maltotriose en maltose et en glucose, de l'amyloglucosidase, de l'alpha amylase et de la xylanase,
b. de l'acide ascorbique,
c. de la farine de blé prégélatinisée, et
d. de la farine de blé malté,
- l'exo amylase maltogène étant utilisée à une teneur comprise entre 50 et 200 ppm,
- l'amyloglucosidase étant utilisée à une teneur comprise entre 50 et 500 ppm,
- l'alpha amylase étant utilisée à une teneur comprise entre 1 et 20 ppm,
- la xylanase étant utilisée à une teneur comprise entre 10 et 80 ppm,
- l'acide ascorbique étant utilisé à une teneur comprise entre 50 et 300 ppm,
- la farine de blé prégélatinisée étant utilisée à une teneur comprise entre 0,1 et 4%, et
- la farine de blé malté étant utilisée à une teneur comprise entre 0,05 et 0,5%,
lesdites teneurs étant exprimées en pourcentage du boulanger c'est-à-dire par rapport à 100% de la farine au pétrin.

3. Utilisation d'un améliorant de panification selon la revendication 1 ou 2 **caractérisée en ce que** le pain cuit est choisi dans le groupe comprenant les pains à croûtes, les pains viennois, les pains au lait, ayant un poids allant de 30 g à 2 Kg.

4. Procédé de fabrication d'un pain cuit par cuisson finale d'un pain précuit et conservé sans congélation à température ambiante ou à 4°C **caractérisé en ce que** le pain précuit est préparé avec des ingrédients comprenant en plus de la farine, du sel, de la levure de boulanger et de l'eau, un améliorant de panification qui comprend :
a. une composition enzymatique comprenant une exoamylase maltogène, ladite exoamylase maltogène étant une enzyme classée sous la référence 3.2.1.1, capable de dégrader le maltotriose en maltose et en glucose, de l'amyloglucosidase, de l'alpha amylase et de la xylanase,
b. de l'acide ascorbique,
c. de la farine de blé prégélatinisée, et
d. de la farine de blé malté,
- l'exo amylase maltogène étant utilisée à une teneur comprise entre 50 et 200 ppm,
- l'amyloglucosidase étant utilisée à une teneur comprise entre 50 et 500 ppm,
- l'alpha amylase étant utilisée à une teneur comprise entre 1 et 20 ppm,
- la xylanase étant utilisée à une teneur comprise entre 10 et 80 ppm,
- l'acide ascorbique étant utilisé à une teneur comprise entre 50 et 300 ppm,
- la farine de blé prégélatinisée étant utilisée à une teneur comprise entre 0,1 et 4%, et
- la farine de blé malté étant utilisée à une teneur comprise entre 0,05 et 0,5%,
lesdites teneurs étant exprimées en pourcentage du boulanger c'est-à-dire par rapport à 100% de la farine au pétrin.

5. Procédé selon la revendication 4 **caractérisé en ce que** les ingrédients utilisés pour préparer le pain comprennent en plus :
- au moins un sucre intervenant dans la réaction dite de Maillard en une quantité excédant celle qui est fermentée par la levure avant la pré-cuisson et suffisante pour donner de la couleur à la croûte lors de la pré-cuisson et/ou une composition enzymatique capable d'apporter au moins un sucre intervenant dans la réaction dite de Maillard en une quantité excédant celle qui est fermentée par la levure avant la pré-cuisson et suffisante pour donner de la couleur à la croûte lors de la pré-cuisson, et/ou au moins une protéine intervenant dans le mécanismes de la réaction dite de Maillard,
- au moins un stabilisant alimentaire choisi parmi les dérivés de cellulose, et les gommes telles que les gommes de xanthane, de guar ou de caroube et les farines pré-gélatinisées, et
- au moins un émulsifiant.

6. Procédé selon la revendication **5 caractérisé en ce que** l'ingrédient contenant au moins un sucre et/ou au moins une protéine intervenant dans la réaction dite de Maillard, est choisi dans la famille du lactosérum, du lactose, du glucose, du galactose, du saccharose, du fructose.

7. Procédé selon l'une des revendications 4 à 6 **caractérisé en ce qu'**il comprend les étapes suivantes :
a. fabrication d'un pâton formé, fermenté et prêt à cuire,
b. pré-cuisson du pâton au four jusqu'à ce que sa mie soit coagulée et sa croûte formée et colorée,
c. refroidissement et conservation du pâton précuit,
d. cuisson finale au four à une température comprise entre 200 et 260°C pendant moins de 10 minutes et de préférence de 3 à 7 minutes.

8. Procédé selon la revendication 7 **caractérisé en ce que** la cuisson finale est opérée préférentiellement à une température comprise entre 200 et 220°C.

9. Procédé selon la revendication 7 ou 8 **caractérisé en ce que** la cuisson finale est opérée sans injection de vapeur.

10. Procédé selon la revendication 7 **caractérisé en ce que** la pré-cuisson est réalisée à une température comprise entre 220 et 280°C et de préférence entre 210 et 250°C.

11. Procédé selon la revendication 7 **caractérisé en ce que** la température du pâton à cœur à la fin de la pré-cuisson est supérieure ou égale à 95°C.

12. Procédé selon la revendication 7 **caractérisé en ce que** le pain précuit est refroidi pour sa conservation jusqu'à ce que sa température à cœur soit inférieure ou égale à 30°C pour une conservation ultérieure à 4°C.

13. Procédé selon la revendication 12 **caractérisé en ce que** la dite conservation est opérée à 4°C pendant une durée allant jusqu'à un mois.

14. Procédé selon la revendication 7 **caractérisé en ce que** le pain précuit est refroidi pour sa conservation jusqu'à ce que sa température à cœur soit inférieure ou égale à 40°C pour une conservation ultérieure à température ambiante.

15. Procédé selon la revendication 14 **caractérisé en ce que** la dite conservation est opérée à température ambiante pendant une durée allant jusqu'à 7 jours.

16. Procédé selon l'une des revendications 4 à 15 **caractérisé en ce que** le pain cuit est choisi dans le groupe comprenant les pains à croûtes, les pains viennois, les pains au lait, ayant un poids allant de 30 g à 2 Kg.

## Patentansprüche

1. Verwendung eines Brotverbesserungsmittels in einem Verfahren zur Herstellung von gebackenem Brot durch endgültiges Backen eines vorgebackenen Brotes, das ohne Einfrieren bei Raumtemperatur für eine Dauer von bis zu 7 Tagen aufbewahrt wurde, wobei das Brotverbesserungsmittel umfasst:
a. eine enzymatische Zusammensetzung, umfassend eine maltogene Exoamylase, wobei die maltogene Exoamylase ein Enzym ist, das unter der Referenz 3.2.1.1 klassifiziert ist und in der Lage ist Maltotriose in Maltose und in Glucose zu zersetzen, Amyloglucosidase, Alpha-Amylase und Xylanase,
b. Ascorbinsäure,
c. vorgelatiniertes Getreidemehl und
d. gemälztes Getreidemehl,
- wobei die maltogene Exoamylase in einem Gehalt zwischen 50 und 200 ppm verwendet wird,
- wobei die Amyloglucosidase in einem Gehalt zwischen 50 und 500 ppm verwendet wird,
- wobei die Alpha-Amylase in einem Gehalt zwischen 1 und 20 ppm verwendet wird,
- wobei die Xylanase in einem Gehalt zwischen 10 und 80 ppm verwendet wird,
- wobei die Ascorbinsäure in einem Gehalt zwischen 50 und 300 ppm verwendet wird,
- wobei das vorgelatinierte Getreidemehl in einem Gehalt zwischen 0,1 und 4% verwendet wird, und
- wobei das gemälzte Getreidemehl in einem Gehalt zwischen 0,05 und 0,5% verwendet wird,
wobei die Gehälter als Bäckerprozent ausgedrückt sind, das heißt in Bezug auf 100% des Mehls in der Knetmaschine.

2. Verwendung eines Brotverbesserungsmittels in einem Verfahren zur Herstellung von gebackenem Brot durch endgültiges Backen eines vorgebackenen Brotes, das ohne Einfrieren bei 4°C für eine Dauer von bis zu 1 Monat aufbewahrt wurde, wobei das Brotverbesserungsmittel umfasst:
a. eine enzymatische Zusammensetzung, umfassend eine maltogene Exoamylase, wobei die maltogene Exoamylase ein Enzym ist, das unter der Referenz 3.2.1.1 klassifiziert ist und in der Lage ist Maltotriose in Maltose und in Glucose zu zersetzen, Amyloglucosidase, Alpha-Amylase und Xylanase,
b. Ascorbinsäure,
c. vorgelatiniertes Getreidemehl und
d. gemälztes Getreidemehl,
- wobei die maltogene Exoamylase in einem Gehalt zwischen 50 und 200 ppm verwendet wird,
- wobei die Amyloglucosidase in einem Gehalt zwischen 50 und 500 ppm verwendet wird,
- wobei die Alpha-Amylase in einem Gehalt zwischen 1 und 20 ppm verwendet wird,
- wobei die Xylanase in einem Gehalt zwischen 10 und 80 ppm verwendet wird,
- wobei die Ascorbinsäure in einem Gehalt zwischen 50 und 300 ppm verwendet wird,
- wobei das vorgelatinierte Getreidemehl in einem Gehalt zwischen 0,1 und 4% verwendet wird, und
- wobei das gemälzte Getreidemehl in einem Gehalt zwischen 0,05 und 0,5% verwendet wird,
wobei die Gehälter als Bäckerprozent ausgedrückt sind, das heißt in Bezug auf 100% des Mehls in der Knetmaschine.

3. Verwendung eines Brotverbesserungsmittels nach Anspruch 1 oder 2, **dadurch gekennzeichnet, dass** das gebackene Brot aus der Gruppe ausgewählt ist, umfassend Krustenbrote, Wiener Brote, Milchbrote mit einem Gewicht im Bereich von 30 g bis 2 kg.

4. Verfahren zur Herstellung eines gebackenen Brotes durch endgültiges Backen eines vorgebackenen Brotes, das ohne Einfrieren bei Raumtemperatur oder bei 4°C aufbewahrt wurde, **dadurch gekennzeichnet, dass** das vorgebackene Brot mit Zutaten zubereitet wird, die zusätzlich zu Mehl, Salz, Bäckerhefe und Wasser ein Brotverbesserungsmittel umfassen, das umfasst:
a. eine enzymatische Zusammensetzung, umfassend eine maltogene Exoamylase, wobei die maltogene Exoamylase ein Enzym ist, das unter der Referenz 3.2.1.1 klassifiziert ist und in der Lage ist Maltotriose in Maltose und in Glucose zu zersetzen, Amyloglucosidase, Alpha-Amylase und Xylanase,
b. Ascorbinsäure,
c. vorgelatiniertes Getreidemehl und
d. gemälztes Getreidemehl,
- wobei die maltogene Exoamylase in einem Gehalt zwischen 50 und 200 ppm verwendet wird,
- wobei die Amyloglucosidase in einem Gehalt zwischen 50 und 500 ppm verwendet wird,
- wobei die Alpha-Amylase in einem Gehalt zwischen 1 und 20 ppm verwendet wird,
- wobei die Xylanase in einem Gehalt zwischen 10 und 80 ppm verwendet wird,
- wobei die Ascorbinsäure in einem Gehalt zwischen 50 und 300 ppm verwendet wird,
- wobei das vorgelatinierte Getreidemehl in einem Gehalt zwischen 0,1 und 4% verwendet wird, und
- wobei das gemälzte Getreidemehl in einem Gehalt zwischen 0,05 und 0,5% verwendet wird,
wobei die Gehälter als Bäckerprozent ausgedrückt sind, das heißt in Bezug auf 100% des Mehls in der Knetmaschine.

5. Verfahren nach Anspruch 4, **dadurch gekennzeichnet, dass** die Zutaten, die zur Zubereitung des Brotes verwendet werden, zusätzlich umfassen:
- mindestens einen Zucker, der an der sogenannten Maillard-Reaktion beteiligt ist, in einer Menge, die die Menge übersteigt, die vor dem Vorbacken von der Hefe fermentiert wird und ausreicht, um der Kruste während des Vorbackens Farbe zu verleihen, und/oder eine enzymatische Zusammensetzung, die in der Lage ist, mindestens einen Zucker mitzubringen, der an der sogenannten Maillard-Reaktion beteiligt ist, in einer Menge, die die Menge übersteigt, die vor dem Vorbacken von der Hefe fermentiert wird und ausreicht, um der Kruste während des Vorbackens Farbe zu verleihen, und/oder mindestens ein Protein, das an den Mechanismen der sogenannten Maillard-Reaktion beteiligt ist,
- mindestens einen Lebensmittelstabilisator, ausgewählt aus den Cellulosederivaten und den Gummis wie den Xanthan-, Guar- oder Johannisbrotkernmehlgummis und den vorgelatinierten Mehlen, und
- mindestens einen Emulgator.

6. Verfahren nach Anspruch 5, **dadurch gekennzeichnet, dass** die Zutat, die mindestens einen Zucker und/oder mindestens ein Protein enthält, der/das an der sogenannten Maillard-Reaktion beteiligt ist, aus der Familie von Molke, Lactose, Glucose, Galactose, Saccharose, Fructose ausgewählt ist.

7. Verfahren nach einem der Ansprüche 4 bis 6, **dadurch gekennzeichnet, dass** es die folgenden Schritte umfasst:
a. Herstellen eines geformten, fermentierten und backfertigen Teigs,
b. Vorbacken des Teigs im Ofen, bis seine Krume koaguliert und seine Kruste geformt und gefärbt ist,
c. Abkühlen und Lagern des vorgebackenen Teigs,
d. endgültiges Backen im Ofen bei einer Temperatur zwischen 200 und 260 °C für weniger als 10 Minuten und vorzugsweise 3 bis 7 Minuten.

8. Verfahren nach Anspruch 7, **dadurch gekennzeichnet, dass** das endgültige Backen vorzugsweise bei einer Temperatur zwischen 200 und 220 °C durchgeführt wird.

9. Verfahren nach Anspruch 7 oder 8, **dadurch gekennzeichnet, dass** das endgültige Backen ohne Injizieren von Dampf durchgeführt wird.

10. Verfahren nach Anspruch 7, **dadurch gekennzeichnet, dass** das Vorbacken bei einer Temperatur zwischen 220 und 280 °C und vorzugsweise zwischen 210 und 250 °C durchgeführt wird.

11. Verfahren nach Anspruch 7, **dadurch gekennzeichnet, dass** die Temperatur des Teigs im Kern am Ende des Vorbackens größer oder gleich 95 °C ist.

12. Verfahren nach Anspruch 7, **dadurch gekennzeichnet, dass** das vorgebackene Brot zur Lagerung abgekühlt wird, bis seine Temperatur im Kern weniger als oder gleich 30 °C beträgt zum anschließenden Lagern bei 4°C.

13. Verfahren nach Anspruch 12, **dadurch gekennzeichnet, dass** die Lagerung bei 4°C über einen Zeitraum von bis zu einem Monat durchgeführt wird.

14. Verfahren nach Anspruch 7, **dadurch gekennzeichnet, dass** das vorgebackene Brot zur Lagerung abgekühlt wird, bis seine Temperatur im Kern weniger als oder gleich 40 °C beträgt zum anschließenden Lagern bei Raumtemperatur.

15. Verfahren nach Anspruch 14, **dadurch gekennzeichnet, dass** die Lagerung bei Raumtemperatur über einen Zeitraum von bis zu 7 Tagen durchgeführt wird.

16. Verfahren nach einem der Ansprüche 4 bis 15, **dadurch gekennzeichnet, dass** das gebackene Brot aus der Gruppe ausgewählt ist, umfassend Krustenbrote, Wiener Brote, Milchbrote mit einem Gewicht im Bereich von 30 g bis 2 kg.

## Claims

1. The use of a breadmaking improver in a method for making baked bread by final baking of precooked bread stored without freezing at room temperature for a period of up to 7 days, said breadmaking improver comprising:
a. an enzyme composition comprising a maltogenic exoamylase, said maltogenic exoamylase being an enzyme classified under reference EC 3.2.1.1, that is able to degrade maltotriose to maltose and glucose, amyloglucosidase, alpha amylase and xylanase,
b. ascorbic acid,
c. pregelatinized wheat flour, and
d. malted wheat flour,
- maltogenic exoamylase being used at a content between 50 and 200 ppm,
- amyloglucosidase being used at a content between 50 and 500 ppm,
- alpha amylase being used at a content between 1 and 20 ppm,
- xylanase being used at a content between 10 and 80 ppm,
- ascorbic acid being used at a content between 50 and 300 ppm,
- pregelatinized wheat flour being used at a content between 0.1 and 4%, and
- malted wheat flour being used at a content between 0.05 and 0.5%,
said contents being expressed in baker's percentage, i.e. relative to 100% of the flour in the kneading machine.

2. The use of a breadmaking improver in a method for making baked bread by final baking of precooked bread stored without freezing at 4°C for a period of up to 1 month, said breadmaking improver comprising:
a. an enzyme composition comprising a maltogenic exoamylase, said maltogenic exoamylase being an enzyme classified under reference EC 3.2.1.1, that is able to degrade maltotriose to maltose and glucose, amyloglucosidase, alpha amylase and xylanase,
b. ascorbic acid,
c. pregelatinized wheat flour, and
d. malted wheat flour,
- maltogenic exoamylase being used at a content between 50 and 200 ppm,
- amyloglucosidase being used at a content between 50 and 500 ppm,
- alpha amylase being used at a content between 1 and 20 ppm,
- xylanase being used at a content between 10 and 80 ppm,
- ascorbic acid being used at a content between 50 and 300 ppm,
- pregelatinized wheat flour being used at a content between 0.1 and 4%, and
- malted wheat flour being used at a content between 0.05 and 0.5%,
said contents being expressed in baker's percentage, i.e. relative to 100% of the flour in the kneading machine.

3. The use of a breadmaking improver according to claim 1 or 2, **characterized in that** the baked bread is selected from the group comprising crusty loaves, Vienna bread, milkbread, having a weight ranging from 30 g to 2 Kg.

4. A method for making baked bread by final baking of precooked bread stored without freezing at room temperature or at 4°C, **characterized in that** the precooked bread is prepared with ingredients comprising, in addition to flour, salt, baker's yeast and water, a breadmaking improver which comprises:
a. an enzyme composition comprising a maltogenic exoamylase, said maltogenic exoamylase being an enzyme classified under reference EC 3.2.1.1, that is able to degrade maltotriose to maltose and glucose, amyloglucosidase, alpha amylase and xylanase,
b. ascorbic acid,
c. pregelatinized wheat flour, and
d. malted wheat flour,
- maltogenic exoamylase being used at a content between 50 and 200 ppm,
- amyloglucosidase being used at a content between 50 and 500 ppm,
- alpha amylase being used at a content between 1 and 20 ppm,
- xylanase being used at a content between 10 and 80 ppm,
- ascorbic acid being used at a content between 50 and 300 ppm,
- pregelatinized wheat flour being used at a content between 0.1 and 4%, and
- malted wheat flour being used at a content between 0.05 and 0.5%,
said contents being expressed in baker's percentage, i.e. relative to 100% of the flour in the kneading machine.

5. The method according to claim 4, **characterized in that** ingredients used to prepare bread additionally comprise:
- at least one sugar that takes part in the Maillard reaction in an amount exceeding that which is fermented by the yeast before precooking and is sufficient to give color to the crust during precooking and/or an enzyme composition that is able to supply at least one sugar that takes part in the Maillard reaction in an amount exceeding that which is fermented by the yeast before precooking and is sufficient to give color to the crust during precooking, and/or at least one protein involved in the mechanisms of the Maillard reaction,
- at least one food-grade stabilizing agent selected from cellulose derivatives, and gums such as xanthan, guar or carob gums and pregelatinized flours, and
- at least one emulsifier.

6. The method according to claim 5, **characterized in that** the ingredient containing at least one sugar and/or at least one protein taking part in the Maillard reaction is selected from the group of whey, lactose, glucose, galactose, sucrose, fructose.

7. The method according to one of claims 4 to 6, **characterized in that** it comprises the following steps:
a. making a formed, fermented dough ball that is ready to be cooked,
b. recooking the dough ball in the oven until its crumb has set and its crust has formed and has changed color,
c. cooling and storing the precooked dough ball,
d. final baking in the oven at a temperature between 200 and 260°C for less than 10 minutes and preferably for 3 to 7 minutes.

8. The method according to claim 7, **characterized in that** the final baking is preferably carried out at a temperature between 200 and 220°C.

9. The method according to claim 7 or 8, **characterized in that** the final baking is carried out without steam injection.

10. The method according to claim 7, **characterized in that** the precooking is carried out at a temperature between 220 and 280°C and preferably between 210 and 250°C.

11. The method according to claim 7, **characterized in that** the internal temperature of the dough ball at the end of precooking is greater than or equal to 95°C.

12. The method according to claim 7, **characterized in that** the precooked bread is cooled for storage until its internal temperature is less than or equal to 30°C for subsequent storage at 4°C.

13. The method according to claim 12, **characterized in that** said storage is carried out at 4°C for a period of up to one month.

14. The method according to claim 7, **characterized in that** the precooked bread is cooled for storage until its internal temperature is less than or equal to 40°C for subsequent storage at room temperature.

15. The method according to claim 14, **characterized in that** said storage is carried out at room temperature for a period of up to 7 days.

16. The method according to one of claims 4 to 15, **characterized in that** the baked bread is selected from the group comprising crusty loaves, Vienna bread, and milkbread, having a weight ranging from 30 g to 2 Kg.
